Europäisches Patentamt

European Patent Office

Office européen des brevets

(19)

(11) Veröffentlichungsnummer: **0 329 980 B1**

(12) **EUROPÄISCHE PATENTSCHRIFT**

(45) Veröffentlichungstag der Patentschrift: **07.04.93**

(51) Int. Cl.5: **B01D 61/00**, A61M 1/18

(21) Anmeldenummer: **89101542.2**

(22) Anmeldetag: **30.01.89**

(54) **Kapillardialysator.**

(30) Priorität: **22.02.88 DE 3805414**

(43) Veröffentlichungstag der Anmeldung:
**30.08.89 Patentblatt 89/35**

(45) Bekanntmachung des Hinweises auf die
Patenterteilung:
**07.04.93 Patentblatt 93/14**

(84) Benannte Vertragsstaaten:
**BE ES FR GB IT LU NL SE**

(56) Entgegenhaltungen:
EP-A- 0 116 155    GB-A- 2 009 034
JP-A-62 250 908    JP-A-62 266 106
US-A- 3 616 928    US-A- 4 293 418

PATENT ABSTRACTS OF JAPAN, Band 12,
Nr. 132 (C-409)[2979], 22. April 1988

(73) Patentinhaber: **SECON Gesellschaft für
Separations- und Concentrationstechnik
mbH
In der Dehne 10
W-3402 Dransfeld(DE)**

(72) Erfinder: **Weickhardt, Ludwig
Hasenwinkel n8
W-3406 Bovenden(DE)**

(74) Vertreter: **Rehberg, Elmar, Dipl.-Ing.
Postfach 3162 Am Kirschberge 22
W-3400 Göttingen (DE)**

## Beschreibung

Die Erfindung geht aus von einem Kapillardialysator nach dem Oberbegriff des Patentanspruchs 1, wie er aus der US-42 93 418 bekannt ist.

Die Kapillaren schwanken von ihrer Herstellung her im Durchmesser und ergeben so, wenn sie gebündelt und in ein Gehäuse eingesetzt werden, unterschiedliche Bündeldurchmesser. Andererseits ist es so, daß auch eine unterschiedliche Anzahl von Kapillaren fallweise in demselben Gehäuse untergebracht wird, um Dialysatoren unterschiedlicher Leistungsstufen herzustellen. In der Regel verbleibt also immer ein gewisser Raum der Kapillaren im Gehäuse, der einmal größer und einmal kleiner ist, so daß sich die Kapillaren dort seitlich verschieben und an einer Seite zusammendrängen können, sich jedenfalls ungleichmäßig verlagern und damit den Querschnitt nicht homogen ausfüllen. Bedingt durch diese Unregelmäßigkeiten verhält sich die Strömung des Dialysats um die Kapillaren herum auch über den Querschnitt gesehen unterschiedlich. Es gibt dann Stellen, wo das Dialysat gleichsam im Kurzschluß schnell durchströmt, während andere Partien wenig oder gar nicht beaufschlagt werden.

Gemäß der eingangs erwähnten US-PS 4 293 418 hat man versucht, diesem Problem dadurch zu begegnen, daß die einzelnen Kapillaren oder auch mehrere Kapillaren zusammen mit einem Faden umwickelt bzw. umschlungen werden, wobei der Faden entweder nach Art eines Gewindes oder auch mit sich kreuzender Verschlingung angebracht werden kann. Der Faden hat dabei den Zweck, daß gleichsam ein Abstandhalter um die einzelne Kapillare gebildet wird. Auch hier ergeben sich Ungleichmäßigkeiten in der Durchströmung des Dialysats, wenn die umwickelten Kapillaren aneinanderliegen, weil sich der Abstandsfaden im einen Fall direkt an der Wandung der Kapillare und im anderen Fall an dem Abstandsfaden der benachbarten Kapillare abstützt. Außerdem wirkt der Abstandsfaden auch nur in aufeinanderfolgenden Abständen und nicht kontinuierlich über die Länge der Kapillaren. Die Herstellung ist vergleichsweise aufwendig, weil ein entsprechender maschineller Aufwand getrieben werden muß. Der wesentliche Nachteil des Abstandsgarns ist jedoch der, daß durch seine Anordnung die Ausdehnung der Kapillaren, die dann eintritt, wenn sie mit Dialysat benetzt werden, behindert wird. Sofern ein Bauschgarn Verwendung findet, ist diesem Nachteil weitgehend entgegengewirkt. Es ist aber durch Umwicklung der Kapillaren mit einem solchen Abstandsgarn nicht möglich, eine Anpassung in der Weise zu erzielen, daß unterschiedliche Anzahlen von Kapillaren in ein und demselben Gehäuse geordnet untergebracht werden können, um unterschiedliche Leistungsstufen zu erreichen.

Außerdem ist es bereits bekannt, die einzelnen Kapillaren miteinander zu vernähen, und zwar in Abständen, so daß letztendlich ein mattenartiges Gebilde entsteht, welches dann aufgerollt werden kann. Der Nähfaden liegt quer zu den Kapillaren und somit auch quer zu der Strömungsrichtung des Dialysats und stellt daher, genau wie der bekannte Abstandsfaden, letztlich immer ein Hindernis für die Dialysatströmung dar. An diesen Fäden können sich Luftblasen anlagern, die dann in dem Dialysator verbleiben und den weiteren Durchgang zunehmend behindern.

Der grundsätzliche Nachteil des Umschlingungsgarns, Abstandsgarns o. dgl. und des Nähgarns andererseits ist immer der, daß durch dieses Garn der Außendurchmesser der Kapillare mit dem Garn vergrößert wird, so daß letztendlich auch wenigen Kapillare in dem Gehäuse untergebracht werden können. Die Einzelbehandlung der Kapillaren mit dem Abstandsgarn oder dem Nähgarn bezieht sich immer auch sämtliche Kapillaren, die in einem Gehäuse angebracht werden. Eine solche Ausrüstung ist darüberhinaus umständlich und teuer.

Der Erfindung liegt die Aufgabe zugrunde, die Vorrichtung nach dem Oberbegriff des Anspruchs 1 dahingehend weiterzuentwickeln, daß in ein und demselben Gehäuse unterschiedliche Anzahlen von Kapillaren - je nach Leistungsstufe - eingebracht werden können und Ungleichmäßigkeiten des Dialysatdurchflusses nicht auftreten. Diese Aufgabe wird mit dem Gegenstand des Anspruchs 1 gelöst.

Die Fäden werden demnach nicht mehr der einzelnen Kapillare zugeordnet, sondern dem Bündel der Kapillaren bzw. dem Teil der Dialysatkammer, der durch die Kapillaren nicht ausgefüllt ist. Aufgrund dieser grundsätzlich anderen Zielrichtung gegenüber dem Stand der Technik und da die Fäden als Beilage-oder Füllfäden ohne direkte Verbindung zu den einzelnen Kapillaren sind, kann die Anzahl der Fäden relativ zu der Anzahl der Kapillaren ohne Weiteres variiert und verändert werden, um trotz Verwendung einheitlicher Gehäuse Dialysatoren unterschiedlicher Leistungsstufen herzustellen. Die Füllfäden dienen dazu, tote Räume in der Dialysatkammer auszufüllen und den Durchflußwiderstand gezielt örtlich zu erhöhen. Es soll also der Querschnitt der Dialysatkammer ausgefüllt werden und nicht die einzelne Kapillare versteift oder geschützt werden. Dabei soll der Beilagefaden durchaus einen gewissen Durchflußwiderstand haben. Infolge seiner Ausbildung als Bauschgarn gestattet er die Durchströmung mit Dialysat. Die Fäden sollen keine Sperrwirkung für das Dialysat ausüben, damit von der Oberfläche der Kapillaren hinsichtlich der Wirkung nichts verlorengeht. Durch die federnde Nachgiebigkeit der Fäden und ihre weitgehend gleichmäßige Verteilung im Bündel entsteht eine sichere und gleichmäßige Verteilung der Kapillaren in der Dialysatkammer. Bevorzugte Strömungskanäle mit kurzschlußartigen Effekten werden vermieden. Es entstehen kurze Dialysatwege, wie sie für eine gute Dialysatleistung erforderlich sind. Die federnde Nachgiebigkeit des Beilagefadens gleicht darüberhinaus auch Herstellungstoleranzen der Kapillaren, beispielsweise im Durchmesser, innerhalb der Produktion aus, ohne daß dabei die Anzahl der Kapillaren oder der Fäden verändert werden müßte. Solche Beilagefäden lassen sich natürlich wesentlich einfacher herstellen und montieren als das um die einzelne Kapillare verschlungene Abstandsgarn aus dem Stand der Technik. Es entfällt eine komplizierte und anfällige Wickelmaschine, da die Beilagefäden ohne Weiteres im Bündel der Kapillaren verteilt beigeschossen werden können. Durch die Zuordnung der Fäden zu dem Bündel und nicht mehr zu einer oder zwei Kapillaren entsteht ein beliebiges Mischungsverhältnis zwischen Kapillaren und Fäden, so daß auf diese einfache Art und Weise die verschiedenen Leistungsstufen der Dialysatoren hergestellt werden können. Erstaunlich und überraschend für den Fachmann ist dabei, daß die bisher bekannte Bandbreite in einer Leitungsstufe eines Kapillardialysators kleiner wird, und zwar wird die Bandbreite der Leitungen in Richtung auf die Idealleistung bzw. Optimalleistung verschoben. Dies bedeutet, daß die Kapillardialysatoren einer Leistungsstufe bei ansonsten unveränderter Herstellung dichter aneinanderliegen, also die angegebene Leistungsstufe verläßlicher und in engeren Grenzen eingehalten wird, als dies bisher möglich war. Durch diese insoweit kleineren Leistungsschwankungen wird die Anwendungssicherheit erhöht. Die gleichmäßige Verteilung der Fäden im Bündel der Kapillaren wirkt sich schon bei der Herstellung des Dialysators vorteilhaft aus. Durch die gleichmäßigere, federnd nachgiebige Verteilung des Bündels im Dialysatraum tritt eine bessere Zentrierung des Bündels während des Schleudervorgangs, bei dem die Einbettmasse eingebracht wird, auf. Schließlich verringert sich auch der Ausschuß während der Herstellung, und zwar auch dann, wenn ein Kapillardialysator vergleichsweise geringer Leistungsstufe, also mit wenigen Kapillaren, hergestellt wird. Gerade diese Herstellung war bisher besonderes problematisch.

Der Erfindung liegt die Erkenntnis zugrunde, daß aufgrund der physikalischen Abhängigkeit des Durchflußwiderstands und damit der Durchflußmenge von der dritten Potenz des Durchmessers eines Strömungskanals ein von den Kapillaren nicht ausgefüllter Strömungspfad in eine genügend große Anzahl von einzelnen kleinen Strömungspfaden aufgeteilt werden kann. Die relativen Strömungsmengen, die durch ein Rohr mit einem Durchmesser D von 10 mm einerseits und durch 100 Rohre mit einem Durchmesser d von 1 mm andererseits strömen, verhalten sich zueinander wie die dritte Potenz der Durchmesser der Rohre gewichtet mit der Anzahl der Rohre, also

$$D^3 : 100 \times d^3 \text{ oder, wie } 1000 : 100 \text{ bzw. } 10:1.$$

Obwohl also in den beiden betrachteten Fällen der gesamte durchströmte Querschnitt, also

$$D^2\pi/4 = 100 \times d^2\pi/4 = 100 \text{ mm}^2\pi/4,$$

gleich groß ist, fließt durch die 100 kleineren Strömungspfade nur 1/10 der Strömungsmenge, die durch das Rohr mit dem Durchmesser von 10 mm fließt. Durch diese Maßnahme der Aufteilung eines einzelnen, großen Strömungspfads, also beispielsweise eines Kurzschlusses in einem Dialysator nach dem Stand der Technik in eine entsprechende Anzahl kleiner Strömungspfade nach der vorliegenden Erfindung, und zwar mit gleicher freier Querschnittsfläche, wird die ungenutzt durch den Dialysator strömende Strömungsmenge an Dialysat um 90% verringert. Hieraus resultiert eine beachtliche Leistungssteigerung. Dies ist auch der Grund dafür, daß eine Erhöhung der Leistungsstufen bei sonst unveränderten Parametern eintritt.

Die Unteransprüche geben vorteilhafte Ausgestaltungen der Erfindung an.

Die Fäden können etwa den Durchmesser der Kapillaren aufweisen oder im Durchmesser etwas kleiner gewählt sein. Damit werden Fäden anderer Größenordnung als im Stand der Technik eingesetzt, wo das Verhältnis von Durchmesser des Umschlingungsfadens zu Durchmesser der Kapillare etwa 1:10 betrug. Bei dem angegebenen Durchmesser handelt es sich um den Durchmesser des Fadens in nicht zusammengedrücktem Zustand. Es versteht sich, daß die Fäden leichter nachgiebig gestaltet sind als die Kapillaren, so daß die Zusammendrückung im Bündel im wesentlichen von den Fäden aufgenommen wird.

Je nach Leistungsstufe ist im Bündel der Kapillaren auf etwa 10 bis 25 der Kapillaren je ein Faden vorgesehen. Dieses Mischungsverhältnis ist frei wählbar und kann an die Anwendungsfälle angepaßt werden.

Als Faden kann ein Bauschgarn mit einer solchen Porosität Verwendung finden, daß dessen Durchflußwiderstand für das Dialysat dem Durchflußwiderstand benachbart liegender Kapillaren entspricht. Es ist also nicht angestrebt, mit dem Faden einen Abschluß der Strömung zu erzielen, sondern es soll auch hier eine gleichmäßige Durchströmung des Querschnitts um die Kapillaren herum mit dem Dialysat erfolgen. Als Faden kann vorzugsweise ein Multifilament oder aber auch ein gekräuselter Einzelfaden Verwendung finden. Wichtig ist eine bauschige, offene Struktur des Fadens, der einerseits zusammendrückbar ist und andererseits selbst auch von Dialysat durchströmt werden kann.

Die Erfindung wird anhand eines Ausführungsbeispiels weiter verdeutlicht und beschrieben. Es zeigen:

Figur 1     einen Schnitt durch einen Kapillardialysator und

Figur 2     eine Ausschnittdarstellung eines Schnitts gemäß der Linie II-II in Figur 1,

Figur 3     einen schematisierten Schnitt durch einen Dialysator nach dem Stand der Technik und

Figur 4     einen schematisierten Schnitt durch den neuen Dialysator.

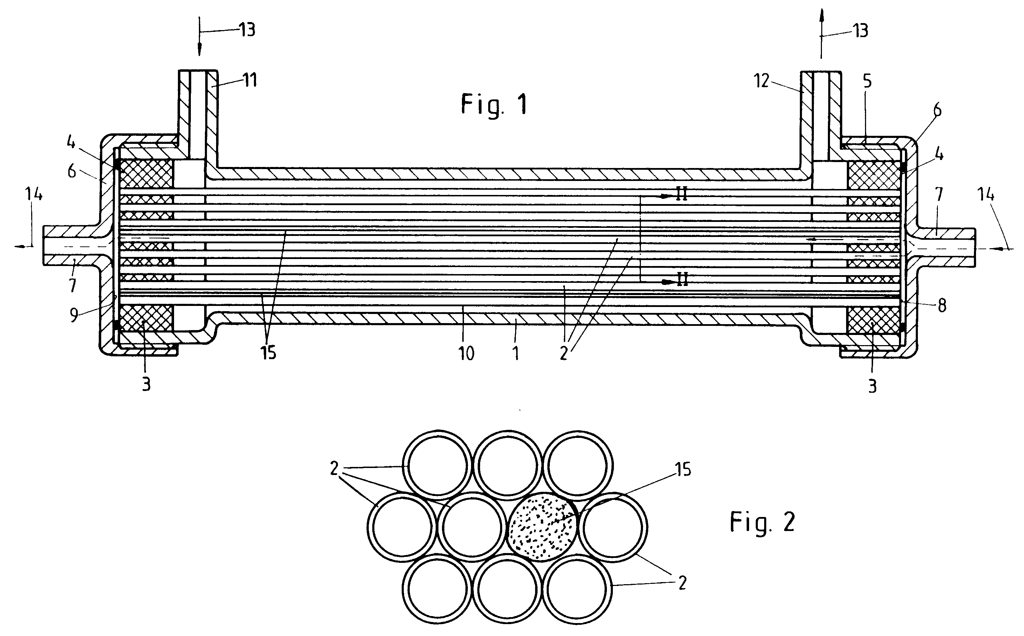

Der in Figur 1 dargestellte Kapillardialysator weist ein rohrabschnittförmiges Gehäuse 1 auf, in welchem ein Bündel aus vielen Kapillaren 2, die in Figur 1 in stark relativ vergrößerter Darstellung und in einer unrealistisch niedrigen Anzahl widergegeben sind, angeordnet sind. An beiden Enden ist das Bündel der Kapillaren 2 in einer Einbettmasse 3 eingeformt, die das Bündel der Kapillaren 2 nicht nur innerhalb des Gehäuses 1 fixiert, sondern die Kapillaren 3 untereinander und gegenüber der Wandung des Gehäuses 1 abdichtet. Die Einbettmasse 3 und die Kapillaren enden in einer Stirnfläche 4. Die Enden des rohrabschnittförmigen Gehäuses 1 sind mit einem Außengewinde 5 versehen, auf welches jeweils ein Deckel 6 unter Zwischenlage einer nicht dargestellten Dichtung aufgeschraubt wird. Der Deckel 6 besitzt einen Anschlußstutzen 7 zum Anschluß einer Schlauchleitung. Am einen Ende des Gehäuses ist auf diese Art und Weise eine Einströmkammer 8 und an anderen Ende eine Ausströmkammer 9 gebildet. Die beiden Kammern 8 und 9 sind grundsätzlich gleich bzw. ähnlich ausgebildet, so daß die Verwendung des Kapillardialysators in der einen oder anderen Richtung erfolgen kann. Es versteht sich, daß durch den einen Anschlußstutzen 7 das Blut in die Einströmkammer 8 eintritt, sich dort auf die Kapillaren 2 verteilt und diese durchströmt. In der Ausströmkammer 9 sammelt sich das Blut aus den einzelnen Kapillaren 2 und strömt durch den Anschlußstutzen 7 wieder aus.

Der zwischen den Kapillaren 2 vorhandene Innenraum 10 zwischen den Einbettmassen 3 ist für das Dialysat bestimmt und bildet so eine Dialysatkammer. Über zwei Stutzen 11 und 12 fließt das Dialysat gemäß den Pfeilen 13, während sich das Blut gemäß den Pfeilen 14 bewegt. Zwischen den Kapillaren 2 und über den Querschnitt des Innenraums 10 weitgehend gleichmäßig verteilt sind Fäden 15 aus Bauschgarn angeordnet. Die Fäden 15 stehen mit den Kapillaren 2 nicht in direkter Verbindung, sondern erstrecken sich lose in der Richtung der Kapillaren 2. Die Fäden 15 weisen etwa einen Durchmesser auf, der den Außendurchmesser einer einzelnen Kapillare 2 entspricht. Es können auch Fäden 15 mit etwas kleinerem Durchmesser eingesetzt werden. Wichtig ist, daß diese Fäden 15 aus bauschigem, federnd nachgiebigem Material bestehen, also beispielsweise aus einem Multifilament, welches auch die übrigen Anforderungen z. B. Verträglichkeit mit dem Dialysat usw. erfüllt. Die Fäden 15 füllen nicht nur den Querschnitt des Innenraums 10 insoweit aus, als dieser von den Kapillaren 2 nicht ausgefüllt wird. Sie stützen und halten die Kapillaren und vermeiden dadurch die Ausbildung von toten Räumen, durch die das Dialysat bisher nach einer Art Kurzschluß strömen konnte. Es wird damit erreicht, daß sich das Dialysat gleichmäßiger auf die Oberfläche der Kapillaren 2 verteilt, so daß überraschenderweise die Bandbreite der Leistungen in einer Leitungsstufe enger zusammengedrängt wird. Dies erhöht die Anwendersicherheit. Die Fäden 15 können in ihrem Mischungsverhältnis relativ zu der Anzahl der Kapillaren 2 frei gewählt werden, so daß unterschiedliche Leistungsstufen unter Verwendung einer einzigen Gehäusegröße möglich sind. Um ein Anwendungsbeispiel zu nennen, können auf 6.000 Kapillaren 250 Fäden vorgesehen sein.

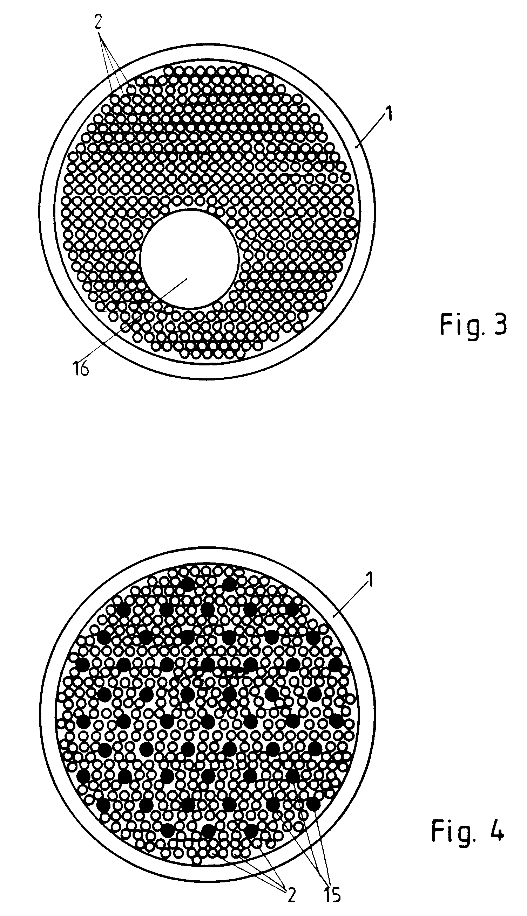

In Figur 3 ist schematisch ein Dialysator nach dem Stand der Technik im Schnitt dargestellt. Die Kapillaren 2 drängen sich dabei innerhalb des Gehäuses 1 eng zusammen, so daß ein einziger großer Strömungsquerschnitt 16 freibleibt bzw. sich ergibt, durch den kurzschlußartig eine große Menge Dialysat strömen kann, die somit für die Wirkung des Dialysators verloren ist.

Figur 4 zeigt in schematisierter Weise die Aufspaltung dieses großen Strömungsquerschnitts in eine Vielzahl kleiner, einzelner Strömungsquerschnitte in Form der eingelagerten Fäden 15, die mehr oder weniger gleichmäßig über die freie Fläche des Gehäuses 1 verteilt angeordnet sind. Es gilt hier die schon beschriebene Abhängigkeit des Durchflußwiderstands und damit der Durchflußmenge von der dritten Potenz des Durchmessers des Strömungsquerschnitts 16 im Vergleich zu den vielen kleinen Strömungsquerschnitten der Fäden 15.

Ein Berechnungsbeispiel soll hier weiter verdeutlichen:

1. Es sei zunächst ein Dialysator mit idealer Verteilung der Kapillaren 2 betrachtet. Dieser Dialysator möge in seinem Gehäuse 1.000 Kapillaren 2 aufweisen, so daß zwischen den Kapillaren 2 2.000 feine Strömungskanäle gebildet sind. Der wirksame Durchmesser der Strömungskanäle möge 0,3 mm betragen, wobei der gesamte durchströmte Querschnitt $180\pi/4$ mm$^2$ ($2000 \times 0,3^2$ mm$^2\pi/4$) ausmacht. Hieraus ergibt sich fur diesen Dialysator mit idealer Verteilung eine Strömungsmengenzahl in Höhe von:

$$2000 \times 0,3^3 = 54.$$

2. Unterstellt man, daß bei dem unter 1. beschriebenen Dialysator die 1.000 Kapillaren nicht in idealer Verteilung über den Querschnitt angeordnet sind, sondern sich ein größerer Strömungsquerschnitt 16 (Figur 3) mit einem Durchmesser von 5 mm gebildet haben möge, so ergeben sich andere Strömungsverhältnisse. Der Durchmesser der Strömungskanäle um den Strömungsquerschnitt 16 herum möge in idealer Verteilung vorliegen. Er verringert sich, da von dem gesamten durchströmten Querschnitt von $180\pi/4$ mm$^2$ nunmehr $25\pi/4$ mm$^2$ auf den größeren Strömungsdurchmesser 16 entfallen, auf einen Durchmesser von 0,278 mm (2000 x $0,278^2$ mm$^2\pi/4$ = 155 mm$^2\pi/4$). Damit ergibt sich eine Strömungsmengenzahl für den Teil des Dialysators mit der Idealverteilung in Höhe von

$$2.000 \times 0,278^3 = 43.$$

Daneben besteht aber, wie vorausgesetzt, der eine große, freie Strömungsquerschnitt 16 mit dem Durchmesser von 5 mm. Als Strömungsmengenzahl dieses Strömungsquerschnitts 16 ergibt sich

$$1 \times 5^3 = 125.$$

Dies entspricht 74 %, da die Gesamtströmungsmengenzahl 168 (= 43 + 125) beträgt, d. h. etwa 3/4 der Dialysatmenge strömen durch den freien Strömungsquerschnitt 16 und entfalten damit keine Wirkung, sie werden also ungenutzt durch den Dialysator geführt. Hingegen entspricht die Strömungsmengenzahl 43 nur 26 % der Dialysatmenge, d. h. nur 26 % der Dialysatmenge strömen durch den Teil des Dialysators, in welchem die Kapillaren in idealer Verteilung vorgesehen sind.

3. Betrachtet man nun im Vergleich dazu den Anmeldungsgegenstand bei dem der freie Querschnitt des Strömungsquerschnitts 16 mit einem Durchmesser von 5 mm in 100 Strömungspfade eines Durchmessers von 0,5 mm aufgeteilt wird, was gleichbedeutend mit dem Einlegen von 100 Fäden 15 des Durchmessers 0,5 mm ist, dann ergibt sich Folgendes. Die Strömungskennzahl 43 für den ideal verteilten Teil ändert sich nicht. Die Strömungsmengenzahl für den Bereich des Strömungsquerschnitts 16, der durch die Einlagerung der Fäden 15 in 100 einzelne Strömungspfade aufgeteilt ist, beträgt jedoch abweichend

$$100 \times 0,5^3 = 12,5.$$

Dies entspricht bei einer Gesamtströmungsmengenzahl von 55,5 (= 43 + 12,5) einer Dialysatmenge von 22,5 %. Es zeigt sich somit, daß durch das Einlegen von 100 Fäden der Anteil der ungenutzten Dialysatmenge von 74 % auf 22,5 % verhindert wird oder anders gesagt, die Dialysatmenge wird wesentlich besser ausgenutzt. Damit ist ein Hinweis für die beobachtete Leistungssteigerung gegeben. Die Leistung wird jedoch nicht nur gesteigert, sondern die Bandbreite der Leistungsstufen verringert sich durch die erfindungsgemäße Ausbildung. Zwei gemessene Versuche mögen dies weiterhin belegen:

A) Es wurde eine Dialysator herkömmlicher Bauart, also ohne eingelegte Fäden 15 untersucht. Dieser wies 10.000 Kapillaren auf. Die Kapillaren hatten einen Innendurchmesser von 0,2 mm. Dieser Dialysator wurde mit einer Blutmenge von 200 ml/min und einer Dialysatmenge von 500 ml/min beaufschlagt. Es wurde eine Leistungsstufe von 169,1 Harnstoff-Clearance +- 16,48 gemessen.

Es wurden sodann bei insoweit unveränderten Ausgangsdaten dem Bündel der 10.000 Kapillaren 4 % Fäden 15 hinzugefügt. Es ergab sich damit eine Leistungsstufe von 182,5 Harnstoff-Clearance +-7,8. Die Leistung ist also von 169,1 auf 182,5 gestiegen, so daß damit die Verschiebung zu einer höheren Leistung meßbar nachgewiesen ist. Gleichzeitig hat die Toleranz der Leistungsstufen von 16,48 auf 7,8 abgenommen.

B) Es wurde ein Dialysator mit 8.700 Kapillaren mit einem Innendurchmesser von 0,2 mm untersucht, wobei auch hier die Beaufschlagung mit 200 ml Blut/min und 500 ml Dialysat/min erfolgte. Es wurde eine Leistungsstufe von 178,7 Harnstoff-Clearance +- 4,8 gemessen. Im Vergleich dazu erbrachte dieser Dialysator, nachdem den Kapillaren 4 % Fäden hinzugefügt waren, eine Leistungsstufe in Höhe von 182,3 Harnstoff-Clearance +- 1,9.

**Patentansprüche**

1. Kapillardialysator mit einem Gehäuse (1), einem Bündel darin beidendig durch eine Einbettmasse (3) fixierter sowie gegeneinander und gegenüber dem Gehäuse (1) abgedichteter Kapillaren (2), an die eine Einström- und eine Ausströmkammer (8, 9) für das Blut angeschlossen ist, und einer um die Kapillaren herumgelegenen Dialysatkammer (10), in der Fäden (15) aus einem Bauschgarn angeordnet sind, dadurch gekennzeichnet, daß die Fäden (15) parallel zu der Erstreckungsrichtung der Kapillaren (2) über den Querschnitt des Bündels verteilt angeordnet sind, und daß im Bündel der Kapillaren (2) eine solche Anzahl von Fäden (15) angeordnet ist, daß der Querschnitt der Dialysatkammer (10) von dem Bündel der Kapillaren (2) mit den Fäden (15) federndnachgiebig ausgefüllt ist.

2. Kapillardialysator nach Anspruch 1, dadurch gekennzeichnet, daß die Fäden (15) den Durchmesser der Kapillaren (2) aufweisen oder im Durchmesser kleiner gewählt sind.

3. Kapillardialysator nach Anspruch 1 oder 2, dadurch gekennzeichnet, daß je nach Leistungsstufe im Bündel der Kapillaren (2) auf 10 bis 25 Kapillaren je ein Faden (15) vorgesehen ist.

4. Kapillardialysator nach einem der Ansprüche 1 bis 3, dadurch gekennzeichnet, daß als Faden (15) ein Bauschgarn mit einer solchen Porosität Verwendung findet, daß dessen Durchflußwiderstand für das Dialysat dem Durchflußwiderstand benachbart liegender Kapillaren (2) entspricht.

5. Kapillardialysator nach einem der Ansprüche 1 bis 4, dadurch gekennzeichnet, daß als Faden (15) ein Multifilament oder ein gekräuselter Einzelfaden Verwendung findet.

6. Kapillardialysator nach einem der Ansprüche 1 bis 5, dadurch gekennzeichnet, daß das Gehäuse (1) rohrförmig ist.

7. Kapillardialysator nach einem der Ansprüche 1 bis 6, dadurch gekennzeichnet, daß die Anordnung der Verteilung der Fäden (15) über den Querschnitt des Bündels gleichmäßig vorgesehen ist.

## Claims

1. Capillary dialyser having a housing (1), having a bundle of capillaries (2) which are immobilised therein at both ends by an embedding composition (3) and are sealed with respect to one another and to the housing (1) and to which an inflow chamber and an outflow chamber (8, 9) for the blood is connected, and having a dialysate chamber (10) which is located around the capillaries and in which threads (15) made of a bulked yarn are arranged, characterised in that the threads (15) are arranged parallel to the extension direction of the capillaries (2) distributed over the cross-section of the bundle, and in that the number of threads (15), arranged in the bundle of capillaries (2) is such that the cross-section of the dialysate chamber (10) is springily flexibly filled by the bundle of capillaries (2) with the threads (15).

2. Capillary dialyser according to Claim 1, characterised in that the threads (15) have the diameter of the capillaries (2) or are chosen to have a smaller diameter.

3. Capillary dialyser according to Claim 1 or 2, characterised in that one thread (15) is provided in each case for 10 to 25 capillaries depending on the level of performance in the bundle of capillaries (2).

4. Capillary dialyser according to any of Claims 1 to 3, characterised in that a bulked yarn whose porosity is such that its flow resistance for the dialysate corresponds to the flow resistance of capillaries (2) with an adjacent location is used as thread (15).

5. Capillary dialyser according to any of Claims 1 to 4, characterised in that a multifilament yarn or a crimped monofilament is used as thread (15).

6. Capillary dialyser according to any of Claims 1 to 5, characterised in that the housing (1) is tubular.

7. Capillary dialyser according to any of Claims 1 to 6, characterised in that a uniform arrangement of the distribution of the threads (15) over the cross-section of the bundle is provided.

## Revendications

1. Dialyseur capillaire avec on boîtier (1), un faisceau fixé à ses deux extrémités dans ce boîtier par une masse d'enrobage (3) ainsi que des capillaires (2) maintenus étanches les uns par rapport aux autres et pur rapport au boîtier (1), auxquels sont raccordées une chambre d'arrivée et une chambre de sortie (8, 9) pour le sang, et une chambre à dialysat (10) disposée autour des capillaires, dans laquelle sont disposés des filaments (15) de fil bouffant, **caractérisé** en ce que les filaments (15) sont disposés parallèlement au sens longitudinal des capillaires (2) en étant répartis sur la section transversale du faisceau, et en ce que, dans le faisceau des capillaires (2), est disposé un nombre de filaments (15) tel que la section transversale de la chambre à dialysat (10) soit complètement remplie par le faisceau des capillaires (2) avec les filaments (15), en pouvant céder élastiquement.

2. Dialyseur capillaire selon la revendication 1, caractérisé en ce que les filaments (15) présentent le même diamètre que les capillaires (2) ou sont choisis avec un diamètre plus petit.

3. Dialyseur capillaire selon la revendication 1 ou 2, caractérisé en ce que, selon l'étage de puissance, un filament (15) est prévu dans le faisceau des capillaires (2) pour chaque groupe de 10 à 25 capillaires.

4. Dialyseur capillaire selon une des revendications 1 à 3, caractérisé en ce qu'on utilise comme filament (15) un fil bouffant avec une porosité telle que sa résistance à la circulation du dialysat corresponde à la résistance à la circulation des capillaires (2) voisins.

5. Dialyseur capillaire selon une des revendications 1 à 4, caractérisé en ce qu'on utilise comme filament (15) un multifilament ou un monofilament bouclé.

6. Dialyseur capillaire selon une des revendications 1 à 5, caractérisé en ce que le boitier (1) est tubulaire.

7. Dialyseur capillaire selon une des revendications 1 à 6, caractérisé en ce que la disposition de la répartition des filaments (15) dans la section transversale du faisceau est prévue uniforme.

Fig. 1

Fig. 2

Fig. 3

Fig. 4